(19) 

Europäisches
Patentamt
European
Patent Office
Office européen
des brevets

(11) **EP 4 610 375 A1**

(12) **EUROPEAN PATENT APPLICATION**
published in accordance with Art. 153(4) EPC

(43) Date of publication:
**03.09.2025 Bulletin 2025/36**

(21) Application number: **23882626.7**

(22) Date of filing: **24.10.2023**

(51) International Patent Classification (IPC):
**C22C 1/04** (2023.01)    **B22F 1/00** (2022.01)
**B22F 5/04** (2006.01)    **B22F 10/28** (2021.01)
**B22F 10/366** (2021.01)    **B22F 10/64** (2021.01)
**C22C 14/00** (2006.01)

(52) Cooperative Patent Classification (CPC):
**B22F 1/00; B22F 5/04; B22F 10/28; B22F 10/366;
B22F 10/64; C22C 1/04; C22C 14/00;** Y02P 10/25

(86) International application number:
**PCT/JP2023/038307**

(87) International publication number:
**WO 2024/090421 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.10.2022 JP 2022170183**

(71) Applicant: **The University of Osaka
Suita-shi Osaka 565-0871 (JP)**

(72) Inventors:
• **NAKANO, Takayoshi
Suita-shi, Osaka 565-0871 (JP)**

• **GOKCEKAYA, Ozkan
Suita-shi, Osaka 565-0871 (JP)**
• **ISHIMOTO, Takuya
Suita-shi, Osaka 565-0871 (JP)**
• **YASUDA, Hiroyuki
Suita-shi, Osaka 565-0871 (JP)**
• **ZHAO, Yan
Suita-shi, Osaka 565-0871 (JP)**

(74) Representative: **Zimmermann & Partner
Patentanwälte mbB
Postfach 330 920
80069 München (DE)**

(54) **STRUCTURE CONTAINING TIAL ALLOY AND METHOD FOR PRODUCING SAID STRUCTURE**

(57)    A structure that contains a TiAl alloy and that can enhance mechanical properties is provided. A structure of the present embodiment is a structure that contains a TiAl alloy, and comprises a solidified portion composed of a TiAl alloy. The metallographic structure of the solidified portion has a cross section including a directional control area in which an $\alpha_2$ phase and a $\beta$ phase are alternately arranged, with the $\alpha_2$ phase being elongated in a predetermined direction, and the $\beta$ phase being elongated in the elongation direction of the $\alpha_2$ phase.

FIG.3

EP 4 610 375 A1

**Description**

TECHNICAL FIELD

The present disclosure relates to a structure containing a TiAl alloy, and more particularly relates to a structure containing a TiAl alloy that is formed by a layer-by-layer manufacturing process of AM (Additive Manufacturing).

BACKGROUND ART

TiAl alloys have low density and a high melting point, and exhibit excellent creep strength. Therefore, TiAl alloys are utilized as components for aerospace industry applications and components for automotive industry applications. Specifically, TiAl alloys are utilized for turbine blades of aircraft engines, and turbocharger wheels of automobile engines and the like. A technique for applying a TiAl alloy to a turbocharger wheel of an automobile engine is disclosed, for example, in Japanese Patent Application Publication No. 2020-79577 (Patent Literature 1).

CITATION LIST

PATENT LITERATURE

Patent Literature 1: Japanese Patent Application Publication No. 2020-79577

SUMMARY OF INVENTION

TECHNICAL PROBLEM

In this connection, there is a demand for further improvement in the mechanical properties of structures containing a TiAl alloy.
An objective of the present disclosure is to provide a structure containing a TiAl alloy that can enhance mechanical properties, and a method for manufacturing the structure.

SOLUTION TO PROBLEM

A structure according to the present disclosure is a structure that contains a TiAl alloy, and includes a solidified portion composed of a TiAl alloy. The metallographic structure of the solidified portion has a cross section including a directional control area in which an $\alpha_2$ phase and a $\beta$ phase are alternately arranged, with the $\alpha_2$ phase being elongated in a predetermined direction, and the $\beta$ phase being elongated in an elongation direction of the $\alpha_2$ phase.
In the structure according to the present disclosure, a cross section of the solidified portion includes a directional control area in which $\alpha_2$ phases and $\beta$ phases are elongated in a predetermined direction. By having the directional control area, the structure of the present disclosure has higher strength in comparison to polycrystalline TiAl alloys. In addition, because the $\alpha_2$ phases and the $\beta$ phases are elongated in a predetermined direction, the formation of interfaces with random crystal orientations is suppressed, and the total interfacial energy is low. Therefore, the metallographic structure is stable even in a high temperature region. In this way, the mechanical properties of the structure are enhanced by the directional control area where the $\alpha_2$ phases and the $\beta$ phases are elongated in a predetermined direction.
Preferably, the cross section of the metallographic structure of the solidified portion further includes a $\gamma$ phase that is contained within the $\alpha_2$ phase and is elongated transversely to an elongation direction of the $\alpha_2$ phase.
In this case, the mechanical properties of the structure are further enhanced.
Preferably, in the structure, a length of the $\alpha_2$ phase and the $\beta$ phase in the elongation direction in the cross section is 500 $\mu$m or more.
In this case, the elongation direction length of the directional control area is much longer than the grain size (maximum size of about 100 $\mu$m) of crystal grains formed in polycrystalline structures of TiAl alloys. Therefore, the structure of the present disclosure is excellent in mechanical properties as compared to conventional polycrystalline structures of TiAl alloys.
Preferably, the structure consists of the solidified portion composed of a TiAl alloy, and the cross section consists of the directional control area.
In this case, the entire structure is composed substantially of the directional control area. Therefore, the mechanical properties are further enhanced.
Preferably, the structure further includes a sintered portion that is a sintered compact of an inorganic material. Here, the term "sintered compact" means a solid in which inorganic powder particles are solidified together to form a plurality of necks by subjecting inorganic particles to a heat treatment at a temperature that is lower than or equal to their melting point.

In this case, the mechanical properties of the structure can be adjusted so as to differ depending on the region, and the mechanical properties can be made anisotropic.

Preferably, in the structure, a space is formed between the solidified portions that are adjacent.

In this case, the mechanical properties of the structure can be adjusted so as to differ depending on the region, and the mechanical properties can be made anisotropic.

A method for manufacturing a structure of the present disclosure includes a design step and a formation step.

In the design step, a scanning method for scanning a beam for forming the structure to be manufactured is determined.

In the formation step, the beam is scanned based on the scanning method for scanning the beam determined in the design step, and inorganic powder particles that serve as a raw material of the structure are melted to form the structure.

In the design step, the structure to be manufactured is divided into a plurality of solidified layers in a build direction, and a scanning method for scanning a beam at each solidified layer is determined.

In the formation step, a layer formation step and a melting step are repeatedly performed alternately to laminate a plurality of the solidified layers to form the aforementioned structure.

In the layer formation step, the inorganic powder particles are supplied onto a base to form an inorganic powder layer.

In the melting step, the beam is scanned based on a scanning method for scanning the beam determined in the design step to melt the inorganic powder layer and form the solidified layer.

In the formation step, in addition, a scanning direction of the beam when forming the solidified layer of a j-th layer (j is a natural number) is adjusted so as to be parallel to or to intersect at 90° with a scanning direction of the beam when forming the solidified layer of a j-1th layer, and when scanning the beam at each layer, the beam is scanned so that a width D0 from an apex of a molten pool having a downwardly convex shape to a position that is elevated by an amount of a height of the inorganic powder layer from the apex in a cross section perpendicular to the beam scanning direction, and a hatch spacing D1 that is a distance between adjacent scanning lines when scanning the beam within a same layer satisfy Formula (1).

$$0 < D1/D0 \le 0.20 \quad (1)$$

The manufacturing method of the present disclosure can manufacture a structure that includes a solidified portion having a cross section including a directional control area by forming solidified layers under the conditions described above.

The method for manufacturing a structure of the present disclosure may further include a heat treatment step.

In the heat treatment step, the structure is subjected to a heat treatment in which a heat treatment temperature is set within a range of 600 to 1300°C.

In this case, in the aforementioned cross section, a $\gamma$ phase is formed that is contained within the $\alpha_2$ phase and is elongated transversely to the elongation direction of the $\alpha_2$ phase.

ADVANTAGEOUS EFFECTS OF INVENTION

The structure containing a TiAl alloy of the present disclosure can enhance mechanical properties. The manufacturing method of the present disclosure can manufacture the aforementioned structure.

BRIEF DESCRIPTION OF DRAWINGS

[FIG. 1] FIG. 1 is a perspective view illustrating an example of a structure according to the present embodiment.

[FIG. 2] FIG. 2 is a photographic image of the metallographic structure in a cross section including a Y-axis and a Z-axis of a solidified portion in a structure according to a first embodiment.

[FIG. 3] FIG. 3 is a schematic diagram of the metallographic structure image in FIG. 2.

[FIG. 4] FIG. 4 is a view showing photographic images of the microstructure in respective regions of a directional control area in a cross section including a Y-axis and a Z-axis of a solidified portion.

[FIG. 5] FIG. 5 is a diagram showing a stress-strain curve of a TiAl alloy structure composed of γ phase that is a conventional TiAl alloy structure, and a stress-strain curve of the structure of the present embodiment.

[FIG. 6] FIG. 6 is a photographic image of the metallographic structure in a cross section including a Y-axis and a Z-axis of a solidified portion of a structure according to a second embodiment.

[FIG. 7] FIG. 7 is a schematic diagram of the metallographic structure image in FIG. 6.

[FIG. 8] FIG. 8 is a diagram showing stress-strain curves of the structure of the first embodiment and the structure of the second embodiment.

[FIG. 9] FIG. 9 is a multiple-view drawing including photographic images and schematic diagrams for describing the mechanism of crack propagation in the structure of the first embodiment and in the structure of the second embodiment.

[FIG. 10] FIG. 10 is a photographic image of the metallographic structure in a cross section including a Y-axis and a Z-axis of a solidified portion that is different from FIG. 2 and FIG. 3.

[FIG. 11] FIG. 11 is a schematic diagram of the metallographic structure image in FIG. 10.

[FIG. 12] FIG. 12 is a photographic image of the metallographic structure in a cross section including a Y-axis and a Z-axis of a solidified portion that is different from FIG. 6 and FIG. 7.

[FIG. 13] FIG. 13 is a schematic diagram of the metallographic structure image in FIG. 12.

[FIG. 14] FIG. 14 is a perspective view of a structure of a third embodiment.

[FIG. 15] FIG. 15 is a perspective view of a structure that is different from FIG. 14.

[FIG. 16] FIG. 16 is a perspective view of a structure of a fourth embodiment.

[FIG. 17] FIG. 17 is a schematic diagram of a layer-by-layer manufacturing device used in a method for manufacturing the structure of the present embodiment.

[FIG. 18] FIG. 18 is a flowchart of a method for manufacturing the structure of the present embodiment.

[FIG. 19] FIG. 19 is a flowchart of a design step in the flowchart in FIG. 18.

[FIG. 20] FIG. 20 is a schematic diagram for describing solidified layers into which the structure is divided in the build direction.

[FIG. 21] FIG. 21 is a schematic diagram illustrating a state in which a solidified layer illustrated in FIG. 20 is partitioned into a plurality of solidified areas DA.

[FIG. 22] FIG. 22 is a view illustrating a scanning path of a beam and the crystal orientation of primary β phase in a case where the elongation direction of $\alpha_2$ phase and β phase of a solidified portion is set to a build direction Z.

[FIG. 23] FIG. 23 is a view illustrating a scanning path of a beam and the crystal orientation of primary β phase in a case where the elongation direction of $\alpha_2$ phase and β phase of a solidified portion is set at an angle of 45° to the build direction Z.

[FIG. 24A] FIG. 24A is a schematic diagram for describing the relation between a hatch spacing and the width of a molten pool.

[FIG. 24B] FIG. 24B is another schematic diagram for describing the relation between a hatch spacing and the width of a molten pool, which is different from FIG. 24A.

[FIG. 25] FIG. 25 is a flowchart of a formation step in the flowchart in FIG. 18.

[FIG. 26] FIG. 26 is a schematic diagram illustrating one step in the formation step in FIG. 25.

[FIG. 27] FIG. 27 is a schematic diagram illustrating a step that follows the step in FIG. 26.

[FIG. 28] FIG. 28 is a schematic diagram illustrating a step that follows the step in FIG. 27.

[FIG. 29] FIG. 29 is a schematic diagram illustrating a step that follows the step in FIG. 28.

[FIG. 30] FIG. 30 is a schematic diagram illustrating a step that follows the step in FIG. 29.

[FIG. 31] FIG. 31 is a schematic diagram illustrating a step that follows the step in FIG. 30.

[FIG. 32] FIG. 32 is a cross-sectional photograph of a structure manufactured by another manufacturing method that is different from the manufacturing method of the present embodiment.

DESCRIPTION OF EMBODIMENTS

[First Embodiment]

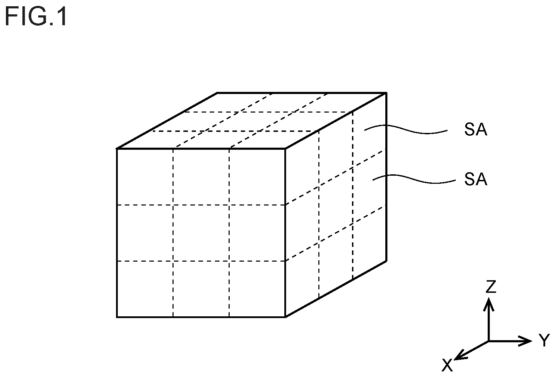

FIG. 1 is a perspective view illustrating an example of a structure according to the present embodiment. The structure includes one or a plurality of solidified portions SA. Each solidified portion SA contains a TiAl alloy. Specifically, the solidified portion SA is formed by a melted TiAl alloy solidifying. The structure may be composed of a single solidified portion SA.

The TiAl alloy constituting the solidified portion SA is an alloy containing Ti and Al. It suffices for the chemical composition of the TiAl alloy to be a well-known chemical composition. The TiAl alloy, for example, may contain one or more elements selected from the group consisting of V, Mo, Fe, Cr, Mn, Ni, Nb, Co, Ta, and W, which are elements that stabilize β phase, in lieu of a part of Al in the chemical composition containing Ti and Al. The TiAl alloy constituting the solidified portion SA may further contain one or more elements selected from the group consisting of B, C, O, and N in lieu of a part of Ti or a part of Al.

The TiAl alloy, for example, contains, in atom%, Ti in an amount of 30 to 70%, Al in an amount of 20 to 60%, and one or more elements selected from the group consisting of V, Mo, Fe, Cr, Mn, Ni, Nb, Co, Ta, W, B, C, O, and N in an amount of 0 to 20% in total.

The TiAl alloy is composed of, for example, one kind or more selected from the group consisting of Ti-44Al-6Nb-1.2Cr, Ti-44Al-4Cr, Ti-(42-45)Al-(1-10)Nb-(0-0.5)B (TNM alloy), Ti-46Al-8Nb-1Cr-0.3Si-0.3Ni, Ti-45Al-5Nb-1Mo-0.3Y, Ti-44Al-6Nb-1.2Cr, Ti-43Al-6Nb-1Mo-1Cr, Ti-45Al-7Nb-0.1W-0.2B-0.2Y, Ti-33.5Al-4.8Nb-1.0Cr-0.2Si (DAT-TA1), Ti-31.8Al-7.5Nb-1.0Cr-0.5Si-0.03C (DAT-TA2), Ti-31.8Al-7.5Nb-1.0Cr-0.35Si-0.1C(DAT-TA3), Ti-45Al-5Nb-0.2B-0.2C (TNB-V4), Ti-48Al-0.8Mo-0.5V-0.2Si(IR-24), Ti-45Al-2Mn-2Nb-0.8 vol% TiB (45XD), and Ti-48Al-2Nb-2Cr.

Note that, in the above description of TiAl alloys, a numerical value that is given with an element symbol means the content of the relevant element in atom percent. Further, in the above description of alloys, the total content of all the elements connected by the symbol "-" is 100% in atom percent. For example, it means that the TiAl alloy "Ti-44Al-6Nb-1.2Cr" has a chemical composition that contains Al in an amount of 44 at%, Nb in an amount of 6 at%, and Cr in an amount of 1.2 at%, with the balance being Ti. Further, it means that the TiAl alloy "Ti-(42-45)Al-(1-10)Nb-(0-0.5)B" has a chemical composition that contains Al in an amount of 42 to 45 at%, Nb in an amount of 1 to 10 at%, and B in an amount of 0 to 0.5 at%, with the balance being Ti.

In FIG. 1, the structure includes a plurality of solidified portions SA. However, as mentioned above, the structure may consist of one solidified portion SA. In other words, the structure may be composed of one solidified portion. Each solidified portion SA of the structure is formed by a layer-by-layer manufacturing process of AM (Additive Manufacturing) described later.

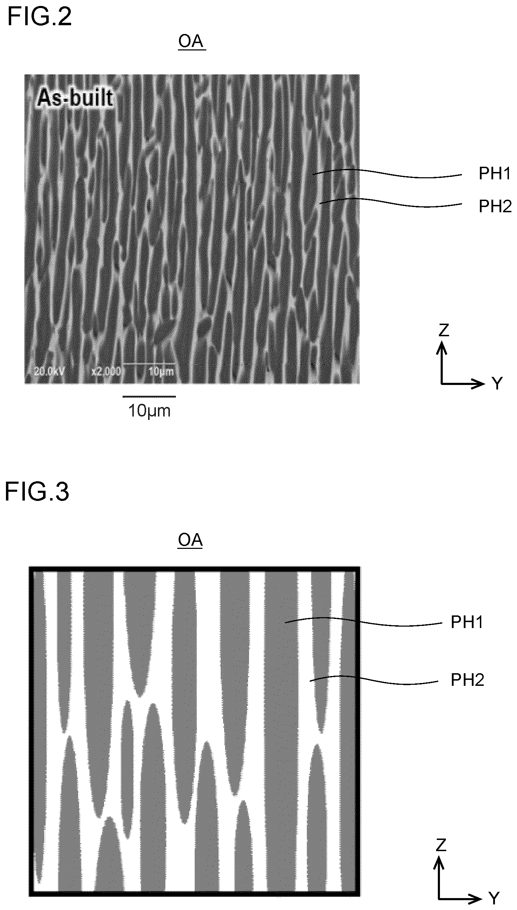

Note that, the term "solidified portion" means a solid that solidified after inorganic powder particles, which are the raw material, melted. Preferably, the compactness of the solidified portion is 99.5% or more. Note that, the compactness of the structure shown in FIG. 2 is 99.9%. Here, the compactness can be calculated by the following equation.

Compactness = actual density of structure/ideal density calculated from chemical composition of structure × 100

In the following, the description is continued based on the assumption that the structure is arranged in an orthogonal coordinate system (X-axis, Y-axis, Z-axis) illustrated in FIG. 1. Here, the Z direction means the build direction in a layer-by-layer manufacturing process described later. In the following description, the Z direction, which is the build direction, is also referred to as " build direction Z". It is possible to identify the build direction Z from the external appearance of the structure. The build direction Z can also be identified by means of the shape of a molten pool after solidification in a cross section of the structure. The molten pool will be described later.

The solidified portion SA has a cross section including a directional control area. FIG. 2 is a photographic image of the metallographic structure in a cross section including the build direction Z (in FIG. 2, a cross section including the Y-axis and Z-axis) of a directional control area OA in the solidified portion SA. FIG. 3 is a schematic diagram of the metallographic structure image in FIG. 2. The photographic image in FIG. 2 was obtained by the following method. A test specimen of a structure composed of a TiAl alloy (Ti-44Al-6Nb-1.2Cr) was prepared by a manufacturing method described later. A cross section including the Z direction (a cross section including the Z direction and the Y direction) of the test specimen was mirror-polished. After being mirror-polished, the cross section was observed at a magnification of $2000\times$ using a scanning electron microscope, and a photographic image was obtained.

Referring to FIG. 2 and FIG. 3, the cross section of the solidified portion SA includes a directional control area OA in which an $\alpha_2$ phase PH1 and a $\beta$ phase PH2 are alternately arranged. The $\alpha_2$ phase has a crystal structure that is a $D0_{19}$ type structure, which is a hexagonal system. The $\alpha_2$ phase is $Ti_3Al$, and Ti sites in the crystal structure may be replaced with the optional elements mentioned above (one or more kinds selected from the group consisting of V, Mo, Fe, Cr, Mn, Ni, Nb, Co, Ta, W, B, C, O, and N). On the other hand, the $\beta$ phase has a crystal structure that is a B2 structure. The $\beta$ phase is TiAl, and Al sites in the crystal structure may be replaced with the optional elements mentioned above.

In the directional control area OA of the solidified portion SA, the $\alpha_2$ phase PH1 is elongated in a predetermined direction. In addition, the $\beta$ phase PH2 is elongated in the same direction as the elongation direction of the $\alpha_2$ phase PH1. The directional control area OA has a layered structure (lamellar structure) in which the $\alpha_2$ phases PH1 and the $\beta$ phases PH2 are arranged in a direction perpendicular to the elongation direction. More specifically, a plurality of the $\alpha_2$ phases PH1 are elongated in the same direction as each other. Furthermore, a plurality of the $\beta$ phases PH2 are elongated in the same direction as each other, and these $\beta$ phases PH2 are elongated in the elongation direction of the $\alpha_2$ phases PH1. In FIG. 2, the $\alpha_2$ phases PH1 and the $\beta$ phases PH2 are elongated in the build direction Z. However, the elongation direction of the $\alpha_2$ phase PH1 and the $\beta$ phase PH2 is not limited to the build direction Z, and the $\alpha_2$ phase PH1 and the $\beta$ phase PH2 may be elongated in another predetermined direction that is different from the build direction Z.

In the structure of the present embodiment, by a layer-by-layer manufacturing process described later, a single-crystal or single-crystal-like $\beta$ phase forms, and an $\alpha_2$ phase is then formed from the $\beta$ phase during solidification. By this means, in the directional control area OA, a layered structure is formed that consists of a plurality of the $\alpha_2$ phases PH1 that are elongated in a predetermined direction, and a plurality of the $\beta$ phases PH2 that are elongated in the elongation direction of the $\alpha_2$ phase. Therefore, in the $\beta$ phases PH2 in the directional control area OA in the structure, {001} poles are concentrated into three poles in a {001} pole figure. More specifically, in the $\beta$ phases PH2 in the directional control area OA, among <001> orientations (an equivalent crystal orientation group) of adjacent regions that are a plurality of regions which each have the same crystal orientation, or one region having the same crystal orientation, an intersection angle between orientations with the smallest intersection angle is within $\pm20°$. Therefore, in the structure of the present embodiment, over almost the entire area of the structure, the plurality of $\alpha_2$ phases PH1 are elongated in the same direction, and the plurality of $\beta$ phases PH2 are elongated in the same direction as the $\alpha_2$ phases PH1.

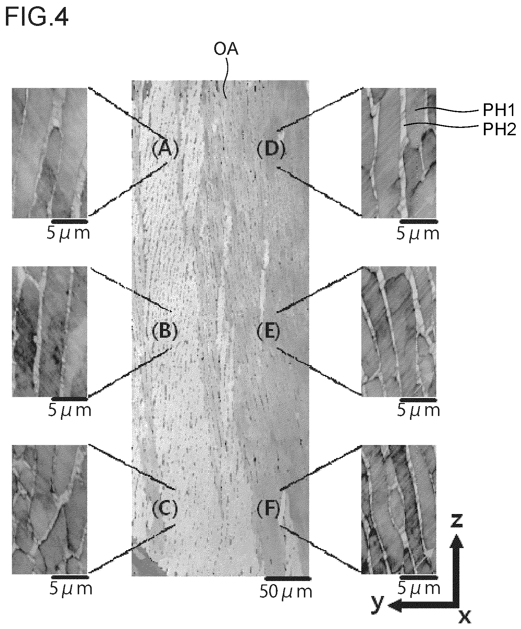

FIG. 4 is a view showing photographic images of the microstructure in respective regions of the directional control area OA in a cross section including the Y-axis and Z-axis of the solidified portion SA. The photographic images in FIG. 4 were obtained by the following method. A test specimen of a structure composed of a TiAl alloy (Ti-44Al-6Nb-1.2Cr) was prepared by a manufacturing method described later. A cross section including the Z direction (a cross section including the Z direction and Y direction) of the test specimen was mirror-polished. After being mirror-polished, the cross section was observed at a magnification of $5000\times$ using a scanning electron microscope, and photographic images were obtained.

In FIG. 4, in each of regions (A) to (F) of the directional control area OA, the elongation directions of the $\alpha_2$ phases PH1 and the $\beta$ phases PH2 are substantially the same. That is, in the directional control area OA shown in FIG. 4, the $\alpha_2$ phases PH1 and the $\beta$ phases PH2 are elongated in the same Z direction over the entire area. Further, among <001> orientations of two regions which each have the same crystal orientation, an intersection angle between orientations where the intersection angle is smallest is within $\pm20°$. The length in the elongation direction (Z direction) of the $\alpha_2$ phases PH1 and the $\beta$ phases PH2 of the directional control area OA in FIG. 4 is 600 $\mu$m. The length in the elongation direction (Z direction) of the $\alpha_2$ phases PH1 and the $\beta$ phases PH2 of the directional control area OA of the present embodiment is 500 $\mu$m or more.

The length in the elongation direction of the $\alpha_2$ phases PH1 and the $\beta$ phases PH2 of the directional control area OA is much longer than the grain size (maximum size of about 100 $\mu$m) of crystal grains formed in polycrystalline structures of TiAl alloys. Note that, the structure of the present embodiment may consist of a solidified portion composed of a TiAl alloy, and the cross section of the solidified portion may consist of the directional control area OA. In other words, the directional control area OA may be formed throughout the entire structure.

The conventional structures composed of TiAl alloys consist of polycrystals, with the maximum length of each crystal grain being approximately 100 $\mu$m. That is, in the structure of the present embodiment, the length of the directional control area in which the $\alpha_2$ phases PH1 and the $\beta$ phases PH2 are elongated in the same direction is far greater than the size of the crystal grains in conventional TiAl alloys. When the length in the elongation direction of the directional control area OA in which the $\alpha_2$ phases PH1 and the $\beta$ phases PH2 are elongated in the same direction is long, excellent mechanical properties are obtained.

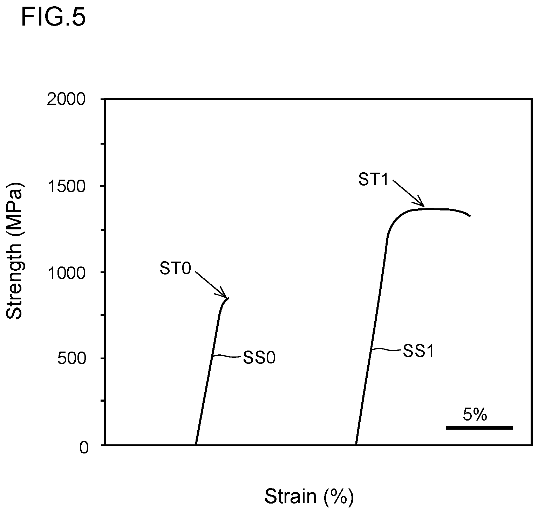

FIG. 5 is a diagram showing a stress-strain curve of a conventional TiAl alloy structure that is a polycrystal containing $\alpha_2$ phase, $\beta$ phase, and $\gamma$ phase, and a stress-strain curve of the structure composed of a TiAl alloy of the present embodiment. In FIG. 5, a curve SS0 is a stress-strain curve at normal temperature of the conventional structure. A curve SS1 is a stress-strain curve at normal temperature of the structure of the present embodiment. The curve SS1 was obtained by applying a load in the build direction Z that is the elongation direction of the $\alpha_2$ phases PH1 and the $\beta$ phases PH2.

Specifically, a test specimen (size of 2 mm $\times$ 2 mm $\times$ 5 mm in height) of a conventional TiAl alloy that was a polycrystal containing $\gamma$ phase, and a test specimen (size of 2 mm $\times$ 2 mm $\times$ 5 mm in height) of the TiAl alloy (Ti-44Al-6Nb-1.2Cr) of the present embodiment consisting of the directional control area OA were prepared. The test specimen of the TiAl alloy of the present embodiment consisted of the solidified portion, and the entire cross section of the solidified portion was the directional control area OA. Each test specimen was subjected to a compression test at normal temperature (25°C) in the atmosphere using an Instron-type compression tester, and the true stress-true strain curves shown in FIG. 5 were obtained.

Referring to FIG. 5, in the conventional structure (SS0) a maximum stress ST0 was approximately 800 MPa, whereas in the structure of the present embodiment a maximum stress ST1 was 1,347 MPa. As described above, in the structure of the present embodiment, excellent mechanical properties are obtained. As mentioned above, the structure of the present embodiment includes the directional control area OA in which the $\alpha_2$ phases PH1 and the $\beta$ phases PH2 are elongated in the same direction. Therefore, when a load is applied in the elongation direction of the $\alpha_2$ phases PH1 and the $\beta$ phases PH2, dislocations accumulate at interfaces between the $\alpha_2$ phases PH1 and the $\beta$ phases PH2. Therefore, the mechanical properties of the structure of the present embodiment are enhanced.

Note that, in the structure of the present embodiment, a part of the solidified portion SA may include a region that differs from the directional control area OA. Preferably, the solidified portion SA consists of the directional control area OA. Preferably, the entire structure consists of one directional control area OA.

In the structure of the present embodiment, the elongation direction length of the $\alpha_2$ phase PH1 and the $\beta$ phase PH2 within the directional control area OA does not have to be 500 $\mu$m or more. For example, in the structure, the elongation direction length of the $\alpha_2$ phase PH1 and the $\beta$ phase PH2 within the directional control area OA may be 200 $\mu$m or more. In the directional control area OA, the length in the elongation direction of the individual phases of the plurality of $\alpha_2$ phases and the plurality of $\beta$ phases does not have to be constant.

[Second Embodiment]

In the structure of the first embodiment, the directional control area OA is a layered structure including $\alpha_2$ phase and $\beta$ phase. However, the directional control area OA may include the $\alpha_2$ phase and the $\beta$ phase, as well as phases other than the $\alpha_2$ phase and the $\beta$ phase.

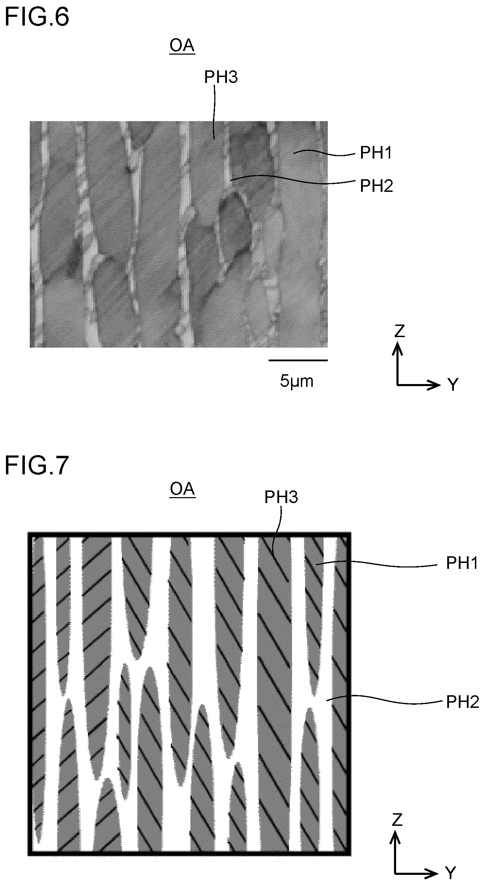

FIG. 6 is a photographic image of the metallographic structure in a directional control area OA of a cross section (a cross section including the Z-axis and Y-axis) that includes the Z-axis of a solidified portion SA of a structure according to a second embodiment. FIG. 7 is a schematic diagram of the metallographic structure in FIG. 6. The photographic image in FIG. 6 was obtained by the following method. A test specimen of a structure composed of a TiAl alloy (Ti-44Al-6Nb-1.2Cr) was prepared by a manufacturing method described later. A cross section including the Z direction (a cross section including the Z direction and Y direction) of the test specimen was mirror-polished. After being mirror-polished, the cross section was observed at a magnification of 5000$\times$ using a scanning electron microscope, and a photographic image was obtained.

Referring to FIG. 6 and FIG. 7, the directional control area OA of the cross section of the solidified portion SA includes $\alpha_2$ phase PH1 and $\beta$ phase PH2 that are elongated in the build direction Z. In addition, the directional control area OA includes $\gamma$ phase PH3. The $\gamma$ phase PH3 has a crystal structure that is an L1$_0$-type ordered structure. The $\gamma$ phase PH3 is TiAl, and Al sites in the crystal structure may be replaced with the optional elements mentioned above.

The $\gamma$ phase PH3 is formed inside the $\alpha_2$ phase PH1, and is elongated transversely to the elongation direction of the $\alpha_2$ phase PH1. In FIG. 6 and FIG. 7, the directional control area OA consists of the $\alpha_2$ phase PH1, the $\beta$ phase PH2, and the $\gamma$ phase PH3. However, the directional control area OA may contain the $\alpha_2$ phase PH1, the $\beta$ phase PH2, and the $\gamma$ phase PH3, and also include other phases. An example of the other phases is $\omega$ phase.

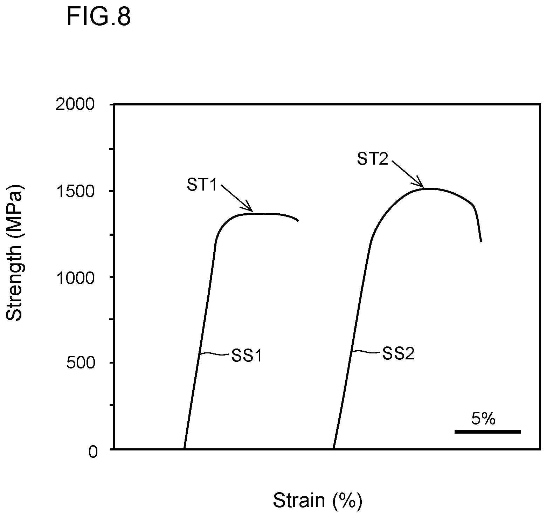

The structure of the second embodiment that is constituted as described above has more excellent mechanical properties as compared to the structure of the first embodiment. FIG. 8 is a diagram showing the stress-strain curve of the structure of the first embodiment, and a stress-strain curve of the structure of the second embodiment. In FIG. 8, a curve SS2 is a stress-strain curve at normal temperature of the structure of the second embodiment. The curve SS2 was obtained by applying a load in the build direction Z that is the elongation direction of the $\alpha_2$ phase PH1 and the $\beta$ phase PH2.

Specifically, a test specimen (size of 2 mm $\times$ 2 mm $\times$ 5 mm in height) of the structure composed of a TiAl alloy (Ti-44Al-6Nb-1.2Cr) of the second embodiment that consisted of the directional control area was manufactured by a manufacturing method to be described later and prepared. The test specimen was subjected to a compression test at normal temperature (25°C) in the atmosphere using an Instron-type compression tester, and the true stress-true strain curve SS2 shown in FIG. 8 was obtained.

Referring to FIG. 8, in the structure of the first embodiment (curve SS1) the maximum stress ST1 was 1347 MPa, whereas in the structure of the second embodiment (curve SS2) a maximum stress ST2 was 1500 MPa. As described above, in the structure of the second embodiment, more excellent mechanical properties are obtained in comparison to the structure of the first embodiment.

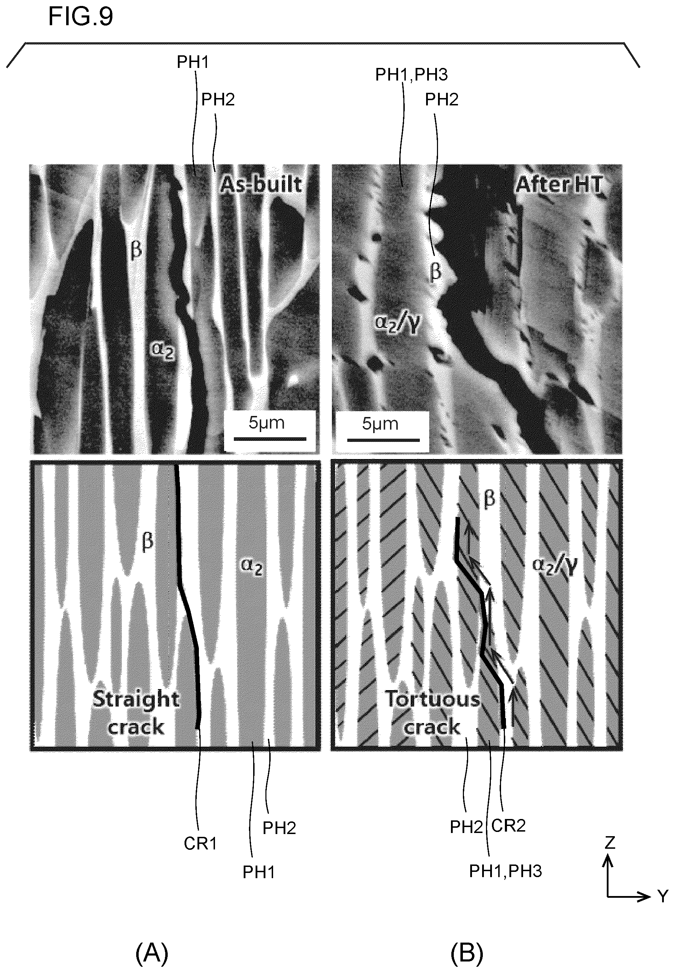

FIG. 9 is a multiple-view drawing including photographic images and schematic diagrams for describing the mechanism of crack propagation in the structure of the first embodiment and in the structure of the second embodiment. The photographic images in FIG. 9 were obtained by the following method. A cross section including the Z direction (a cross section including the Z direction and Y direction) of the test specimen subjected to the compression test illustrated in FIG. 8 was mirror-polished. After being mirror-polished, the cross section was observed at a magnification of 1800$\times$ using a scanning electron microscope, and photographic images were obtained.

FIG. 9(A) shows the propagation of a crack in the structure of the first embodiment. FIG. 9(B) shows the propagation of a crack in the structure of the second embodiment.

The maximum stress is influenced by the ease with which a crack that occurs within a structure propagates. Specifically, in a case where it is easy for a crack to propagate, the maximum stress tends to be low. The more difficult it is for a crack to propagate, the higher the maximum stress tends to be.

Referring to FIG. 9, in the case of the structure of the first embodiment in which the $\gamma$ phase PH3 is not formed inside the $\alpha_2$ phase PH1 (see FIG. 9(A)), when a crack CR1 occurs, the crack CR1 propagates along an interface between the $\alpha_2$ phase PH1 and the $\beta$ phase PH2. On the other hand, in the case of the structure of the second embodiment in which the $\gamma$ phase PH3 is formed inside the $\alpha_2$ phase PH1 (see FIG. 9(B)), a resultant crack CR2 not only propagates along an interface between the $\alpha_2$ phase PH1 and the $\beta$ phase PH2, but also propagates along an interface between the $\alpha_2$ phase PH1 and the $\gamma$ phase PH3. Thus, in the case of the structure of the second embodiment, the propagation path of a crack can be made complex. As a result, propagation of the crack can be suppressed compared to the structure of the first embodiment. Therefore, in the structure of the second embodiment, the maximum stress is higher as compared to the structure of the first embodiment.

As described above, in the structure of the second embodiment, the directional control area OA includes the $\alpha_2$ phase PH1 and the $\beta$ phase PH2, and also includes the $\gamma$ phase PH3 that is formed inside the $\alpha_2$ phase PH1 and is elongated transversely to the elongation direction of the $\alpha_2$ phase PH1. Therefore, in the structure of the second embodiment the mechanical properties can be further enhanced in comparison to the structure of the first embodiment.

The structure of the second embodiment is formed by subjecting the structure of the first embodiment to a heat treatment described later.

Note that, in the first and second embodiments, the $\alpha_2$ phase PH1 and the $\beta$ phase PH2 inside the directional control area OA are elongated in the build direction Z. However, the elongation direction of the $\alpha_2$ phase PH1 and the $\beta$ phase PH2 is not limited to the build direction Z.

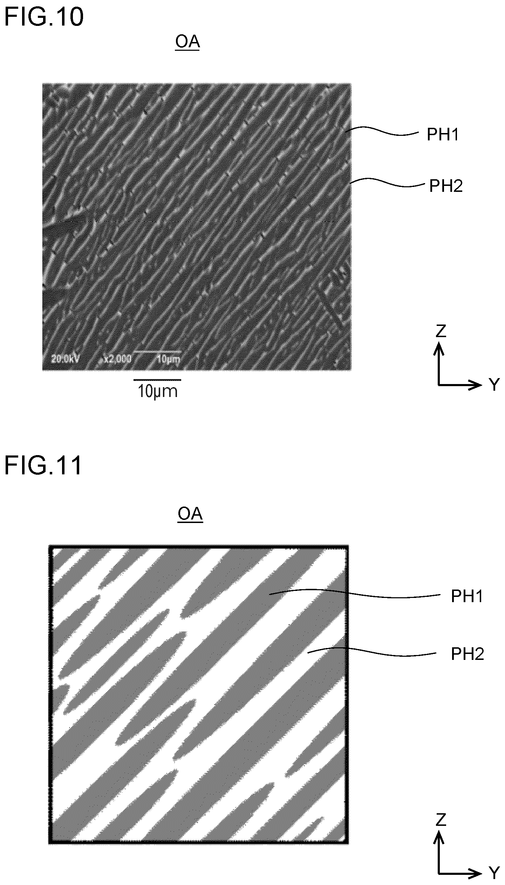

FIG. 10 is a photographic image of the metallographic structure in the directional control area OA in a cross section including the Y-axis and Z-axis of the solidified portion SA that is different from FIG. 2 and FIG. 3, and FIG. 11 is a schematic diagram of the metallographic structure image in FIG. 10. The photographic image in FIG. 10 was obtained by the same method as the photographic image in FIG. 2. Note that, the structure was composed of a TiAl alloy composed of Ti-44Al-6Nb-1.2Cr.

Referring to FIG. 10 and FIG. 11, in the structure of the first embodiment the elongation direction of the $\alpha_2$ phase PH1 and the $\beta$ phase PH2 of the directional control area OA may be inclined with respect to the build direction Z. In FIG. 10, the elongation direction of the $\alpha_2$ phase PH1 and the $\beta$ phase PH2 is inclined 45° with respect to the build direction Z. Even in this case, if a load is applied in the elongation direction of the $\alpha_2$ phase PH1 and the $\beta$ phase PH2, a stress-strain curve that is equal to the stress-strain curve SS1 shown in FIG. 5 will be obtained.

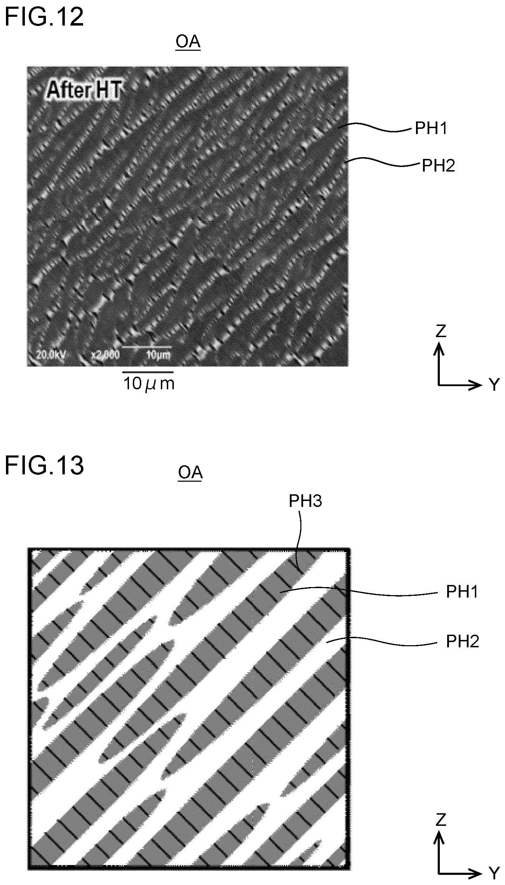

FIG. 12 is a photographic image of the metallographic structure in the directional control area OA of a cross section including the Z-axis (a cross section including the Z-axis and Y-axis) of the solidified portion SA that is different from FIG. 6 and FIG. 7, and FIG. 13 is a schematic diagram of the metallographic structure image in FIG. 12. The photographic image in FIG. 12 was obtained by the same method as the photographic image in FIG. 2. Note that, the structure was a TiAl alloy composed of Ti-44Al-6Nb-1.2Cr.

Referring to FIG. 12 and FIG. 13, in the structure of the second embodiment, the directional control area OA has

the $\alpha_2$ phase PH1, the $\beta$ phase PH2, and the $\gamma$ phase PH3, and the elongation direction of the $\alpha_2$ phase PH1 and the $\beta$ phase PH2 may be inclined with respect to the build direction Z. In FIG. 12, the elongation direction of the $\alpha_2$ phase PH1 and the $\beta$ phase PH2 is inclined 45° with respect to the build direction Z. Even in this case, if a load is applied in the elongation direction of the $\alpha_2$ phase PH1 and the $\beta$ phase PH2, a stress-strain curve that is equal to the stress-strain curve SS2 shown in FIG. 8 will be obtained.

As described above, in the directional control area OA, the elongation direction of the $\alpha_2$ phase PH1 and the $\beta$ phase PH2 is not particularly limited. As long as the $\alpha_2$ phase PH1 and the $\beta$ phase PH2 are each elongated in a predetermined direction and the solidified portion SA forms a layered structure, the elongation direction of the $\alpha_2$ phase PH1 and the $\beta$ phase PH2 is not particularly limited.

[Third Embodiment]

In the first and second embodiments, the structure includes one or a plurality of the solidified portions SA. However, the structure may include a structural unit (structural part) of another form that is different from the form of the solidified portion SA.

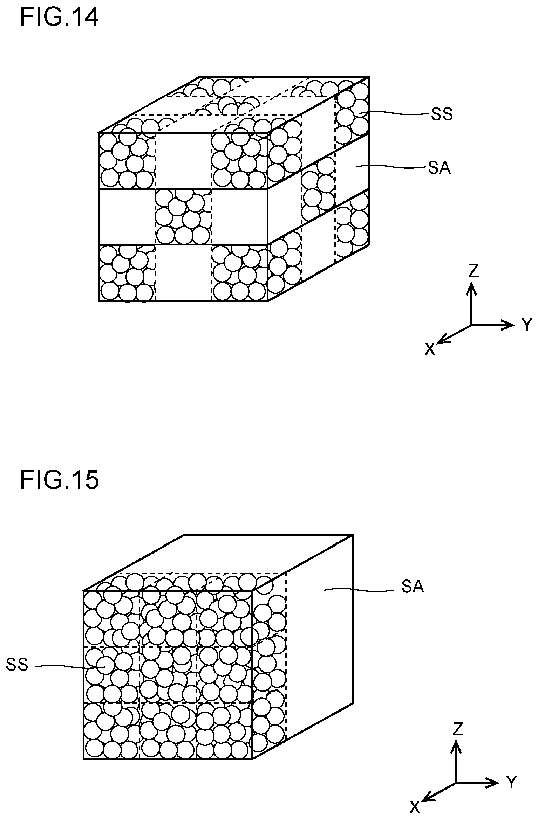

FIG. 14 is a perspective view of a structure of a third embodiment. As illustrated in FIG. 14, the structure of the third embodiment includes solidified portions SA and sintered portions SS. By adjusting the arrangement of the solidified portions SA and the sintered portions SS in the structure, the mechanical properties of the structure can be adjusted so as to differ depending on the region, and the mechanical properties can be made anisotropic.

The sintered portion SS is a sintered compact of inorganic powder particles. Here, the term "sintered compact" means a solid in which inorganic powder particles are solidified together to form a plurality of necks by subjecting the inorganic powder particles to a heat treatment at a temperature that is lower than or equal to the melting point thereof. The sintered portion SS is formed by sintering inorganic powder particles by adjusting the energy density of a beam (a laser or an electron beam) in a layer-by-layer manufacturing process. The sintered portion SS may also be formed by subjecting the structure after a layer-by-layer manufacturing to a heat treatment. Specifically, during a layer-by-layer manufacturing, a beam is irradiated onto a region corresponding to the solidified portion SA, and irradiation of the beam is stopped in a region corresponding to the sintered portion SS. Thereafter, the structure is subjected to a heat treatment to form the sintered portion SS. At such time, inorganic powder particles in the region corresponding to the sintered portion SS are sintered and the sintered portion SS is formed.

Because the sintered portion SS is a solid body in which necks are formed, the sintered portion SS is porous. That is, the sintered portion SS has a plurality of pores. Therefore, the density of the sintered portion SS is lower than the density of the solidified portion SA. As a result, the strength is lower than in the solidified portion SA. For example, in the structure, the solidified portion SA is arranged at a region where high strength is required, and the sintered portion SS is arranged at a region where low strength is required. In this case, the structure can have mechanical properties that differ depending on the region. The arrangement of the sintered portions SS is not particularly limited. FIG. 15 is a perspective view of a structure that is different from the structure in FIG. 14. Referring to FIG. 15, the structure includes sintered portions SS and solidified portions SA. The solidified portions SA and the sintered portions SS are laminated in the X direction. As described above, it suffices to appropriately adjust the arrangement of the solidified portions SA and the sintered portions SS according to the required mechanical properties.

As described above, by the structure also including the sintered portions SS, and not only the solidified portions SA, the structure can be given mechanical properties that differ depending on the region in the structure.

[Fourth Embodiment]

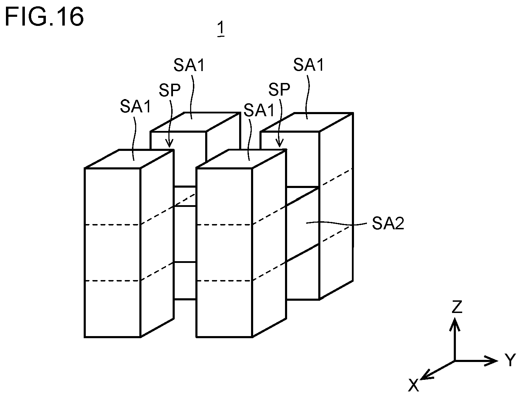

FIG. 16 is a perspective view of a structure according to a fourth embodiment. Referring to FIG. 16, the structure has a space SP between adjacent solidified portions SA. Specifically, the structure includes a plurality of solidified portions SA1 extending in the build direction Z, and a solidified portion SA2 which extends in the Y direction and which is in contact with a central part in the build direction Z of each of the plurality of solidified portions SA1. The solidified portions SA1 and the solidified portion SA2 are integrally formed. In the structure in FIG. 16, a space SP is formed between adjacent solidified portions SA1.

The structure including the spaces SP is not limited to the shape illustrated in FIG. 16. The shape of the structure is not particularly limited as long as the structure includes a plurality of solidified portions SA, and a plurality of spaces SP which are formed between adjacent solidified portions SA. As illustrated in FIG. 16, the space SP may be a space in which one part is open, or may be a closed space surrounded by solidified portions SA.

In a case where the space SP is formed between adjacent solidified portions SA, the mechanical properties can be adjusted according to the region in the structure. By arranging the sintered portions SS and/or the spaces SP in the structure in addition to the solidified portions SA, as in the third and fourth embodiments, the structure has shape anisotropy. Therefore, the structure can have mechanical properties that differ from region to region.

[Other Embodiments]

The structure of the present embodiment may include another solidified portion other than the solidified portion SA composed of a TiAl alloy. For example, the structure of the present embodiment may include the solidified portion SA composed of a TiAl alloy described above, and another solidified portion composed of an alloy which is different from the TiAl alloy. Preferably, the structure of the present embodiment consists of the solidified portion SA composed of a TiAl alloy.

[Method for manufacturing structure]

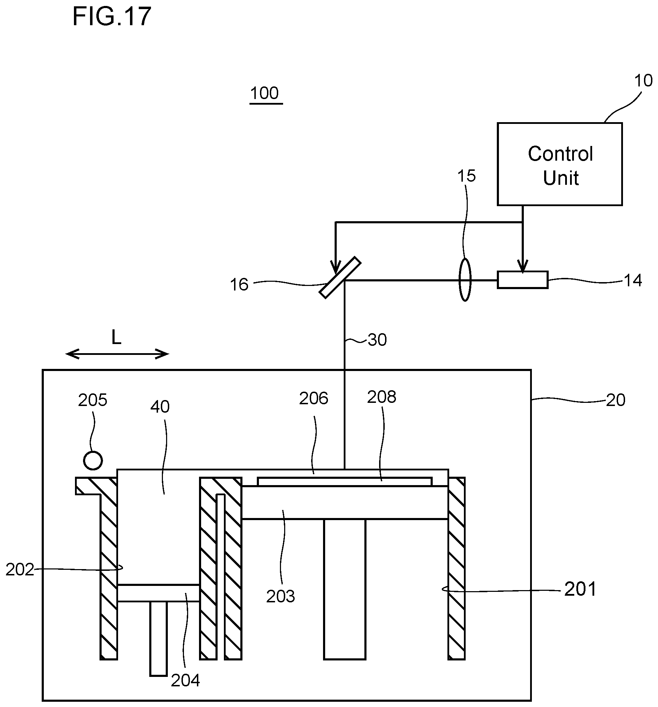

Hereunder, a method for manufacturing the structure of the present embodiment is described. The structure of the present embodiment is manufactured by a layer-by-layer manufacturing process of AM (Additive Manufacturing). In the method for manufacturing the structure by a layer-by-layer manufacturing process, for example, a layer-by-layer manufacturing device illustrated in FIG. 17 is used.

[Configuration of a layer-by-layer manufacturing device]

Referring to FIG. 17, a layer-by-layer manufacturing device 100 is a laser additive manufacturing device. The layer-by-layer manufacturing device 100 includes a control unit 10, a beam generator 14, a lens system 15, a mirror (galvanometer mirror) 16, and a chamber 20.

The beam generator 14 is a high energy heat source, and emits a beam. Here, the term "beam" refers to a laser beam or an electron beam. The beam generator 14 is, for example, a solid-state laser such as a fiber laser or a YAG laser, or a $CO_2$ laser. The lens system 15 converges the beam emitted from the beam generator 14 to form a beam 30. The mirror 16 is used when performing an operation to irradiate the beam 30. That is, the position (beam scanning position) at which the beam 30 is irradiated is adjusted using the mirror 16.

The chamber 20 includes a bed forming chamber 201, a powder supply chamber 202, a modeling table 203, and a recoater 205.

The bed forming chamber 201 is hollow-shaped and has an opening at the upper end thereof. The modeling table 203 is housed in the bed forming chamber 201, and is supported so as to be capable of moving up and down in the vertical direction. The modeling table 203 is moved up and down by a motor that is not illustrated in the drawings. A base 208 is arranged on the modeling table 203.

The powder supply chamber 202 is arranged next to the bed forming chamber 201. The powder supply chamber 202 has a cylindrical shape and includes therein a piston 204 that can move up and down in the vertical direction. Inorganic powder particles 40 that serve as the starting material of the structure are stacked on the piston 204. When forming the solidified portion SA, the inorganic powder particles 40 may be powder consisting of a TiAl alloy, or may be powder that includes Ti powder and Al powder. When the piston 204 rises, the inorganic powder particles 40 are discharged from an upper opening of the powder supply chamber 202 and supplied to the bed forming chamber 201.

The recoater 205 is arranged in the vicinity of the upper opening of the powder supply chamber 202. The recoater 205 is moved in a specific direction (horizontal direction) by an unshown motor to move reciprocally between the powder supply chamber 202 and the bed forming chamber 201. In FIG. 17, the recoater 205 moves reciprocally in an L direction.

By moving in the L direction, the recoater 205 causes the inorganic powder particles 40 discharged from the powder supply chamber 202 to move in the horizontal direction to thereby supply the inorganic powder particles 40 to the bed forming chamber 201. An inorganic powder layer 206 is formed by the inorganic powder particles 40 accumulated on the base 208 of the modeling table 203 inside the bed forming chamber 201. As the recoater 205 moves in the L direction, the inorganic powder particles 40 move in the horizontal direction so that the surface of the inorganic powder layer 206 is made flat.

Note that, a roller may be used instead of the recoater 205. In a case where a roller is used, the inorganic powder layer 206 can be formed while pressing the roller against the inorganic powder particles 40 as desired.

The control unit 10 includes a central processing unit (CPU), a memory, and a storage that are not illustrated in the drawings. The storage may be an HDD (hard disk drive), or may be an SSD (solid state drive). A well-known CAD (Computer Aided Design) application and a CAM (Computer Aided Manufacturing) application are stored in the storage.

The control unit 10 utilizes the well-known CAD application to set a three-dimensional shape of the structure to be manufactured. In addition, the control unit 10 utilizes the CAM application to set manufacturing conditions based on the set three-dimensional shape. In the layer-by-layer manufacturing process, a plurality of solidified layers formed by the beam 30 are laminated to manufacture the structure. The manufacturing conditions include manufacturing conditions to be used when forming the respective solidified layers. The control unit 10 controls the beam generator 14, the lens system 15, and the mirror 16 based on the manufacturing conditions data to adjust the scanning method (energy density, scanning speed, scanning pattern (scanning path and scanning direction), and beam irradiation position and the like of the beam 30) for scanning the beam 30.

[Regarding manufacturing process]

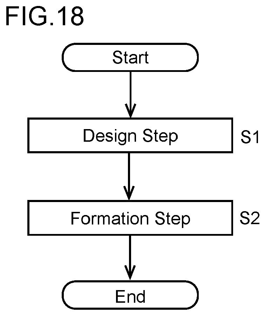

In the method for manufacturing the structure of the present embodiment, the structure is manufactured using a layer-by-layer manufacturing process. FIG. 18 is a flowchart of the method for manufacturing the structure of the present embodiment. Referring to FIG. 18, the manufacturing method of the present embodiment includes a design step S1 and a formation step S2. In the design step S1, the three-dimensional shape of the structure to be manufactured is determined. Further, in a case where the structure includes not only the solidified portion SA, but also the sintered portions SS and/or the spaces SP, in the design step S1, the arrangement of the sintered portions SS and the spaces SP is determined. Furthermore, in the design step S1, the structure to be manufactured is divided into a plurality of solidified layers in the build direction based on the determined three-dimensional shape. In addition, the scanning method for scanning the beam 30 in order to form the structure to be manufactured is determined.

In the formation step S2, the beam 30 is irradiated based on the determined scanning method for scanning the beam 30, and the inorganic powder particles 40 are thereby melted to form the solidified portion SA and manufacture the structure. Hereunder, the design step S1 and the formation step S2 are described in detail.

[Regarding design step S1]

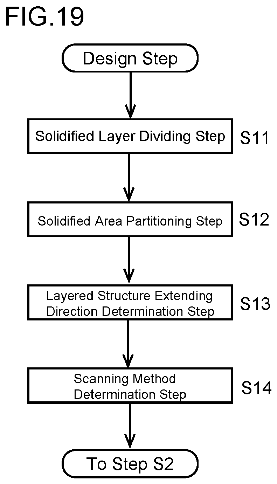

FIG. 19 is a flowchart of the design step S1. Referring to FIG. 19, first, the three-dimensional shape of the structure to be manufactured is determined using the control unit 10. The three-dimensional shape of the structure is not particularly limited. In the present example, the description will be continued assuming that the structure is to have a cubic shape.

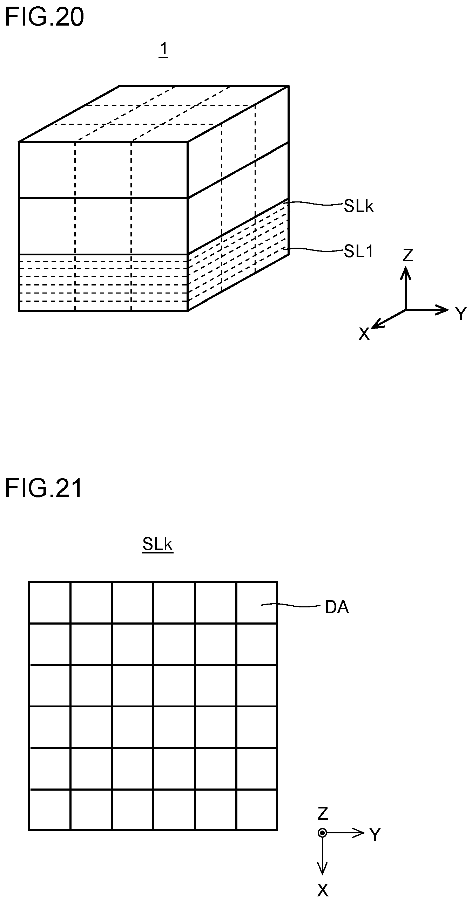

After the three-dimensional shape of the structure is determined, as illustrated in FIG. 20, the three-dimensional shape of the structure is divided into a plurality of solidified layers SLk in the build direction Z (S11). Specifically, here, the structure is sliced into a preset number of lamination layers kmax (layers) of solidified layers SLk (k is a natural number, and the maximum number is kmax) to thereby divide the structure. In some cases, each of the plurality of solidified layers SLk of the structure may have a different shape to the other solidified layers SLk. Therefore, manufacturing conditions data is created for each solidified layer SLk.

Note that, referring to FIG. 21, each solidified layer SLk may be partitioned into a plurality of solidified areas DA as viewed in the build direction Z (S12). That is, S12 is an optional step. In the case of performing S12, in FIG. 21, the solidified area DA is a rectangular shape. However, the shape of the solidified area DA may also be a different shape other than a rectangular shape. For example, the solidified area DA may be a triangular shape or a polygonal shape other than a rectangle.

Next, the control unit 10 sets the elongation direction of the $\alpha_2$ phase PH1 and the $\beta$ phase PH2 of the solidified portion SA composed of the TiAl alloy. For example, the elongation direction of the $\alpha_2$ phase PH1 and the $\beta$ phase PH2 is set to the build direction Z (S13). Then, the scanning method (scanning path) for scanning the beam 30 is determined according to the determined crystal orientations (S14).

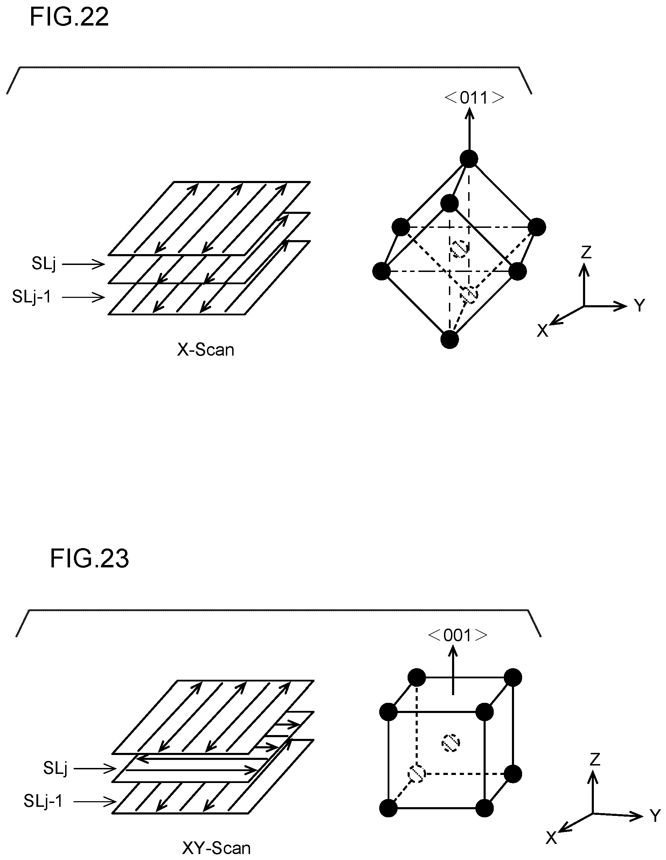

For example, in a case where the elongation direction of the $\alpha_2$ phase PH1 and the $\beta$ phase PH2 of the solidified portion SA is set to the build direction Z (that is, a case where the metallographic structure is to be made the metallographic structure illustrated in FIG. 2, FIG. 3, FIG. 6, and FIG. 7), as illustrated in FIG. 22, the scanning direction of the beam 30 when forming a solidified layer SLj of a j-th layer (j is a natural number) is adjusted so as to be parallel to the scanning direction of the beam 30 when forming a solidified layer SLj-1 of a j-1th layer that is the layer underneath the j-th layer. At such time, within the same layer, the scanning directions at adjacent scanning lines are not particularly limited. The scanning directions of the beam 30 at the adjacent scanning lines may be the same directions as each other, or as illustrated in FIG. 22, may be opposite directions to each other. In other words, within the same layer, the beam 30 may be subjected to one-way scanning (scanning in only one direction), or may be subjected to two-way scanning. As a result, the crystal structure of primary $\beta$ phase on an orthogonal coordinate system becomes the crystal structure illustrated in FIG. 22. That is, the <011> orientation of the primary $\beta$ phase is along the Z direction.

On the other hand, in a case where the elongation direction of the $\alpha_2$ phase PH1 and the $\beta$ phase PH2 of the solidified portion SA is made a direction that is inclined at 45° with respect to the build direction Z (that is, a case where the metallographic structure is to be made the metallographic structure illustrated in FIG. 10 to FIG. 13), as illustrated in FIG. 23, the scanning direction of the beam 30 when forming a solidified layer SLj of a j-th layer (j is a natural number) is adjusted so as to intersect at an angle of 90° (that is, so as to be orthogonal) with the scanning direction of the beam 30 when forming a solidified layer SLj-1 of a j-1th layer that is the layer underneath the j-th layer. Within the same layer (or within the solidified area DA), the scanning directions at adjacent scanning lines are not particularly limited. The scanning of the beam 30 may be one-way scanning or may be two-way scanning. As a result, the crystal structure of primary $\beta$ phase on an orthogonal coordinate system becomes a crystal structure as illustrated in FIG. 23. That is, the <001> orientation of the primary $\beta$ phase is along the Z direction.

The method for scanning the beam 30 is determined by the above method (S14). Note that, in the step of determining the method for scanning the beam 30, the conditions for the beam 30 (output E and scanning speed and the like of the beam 30) are also determined according to the energy density ($J/mm^2$) required for melting and solidifying the solidified layer that is the j-th layer.

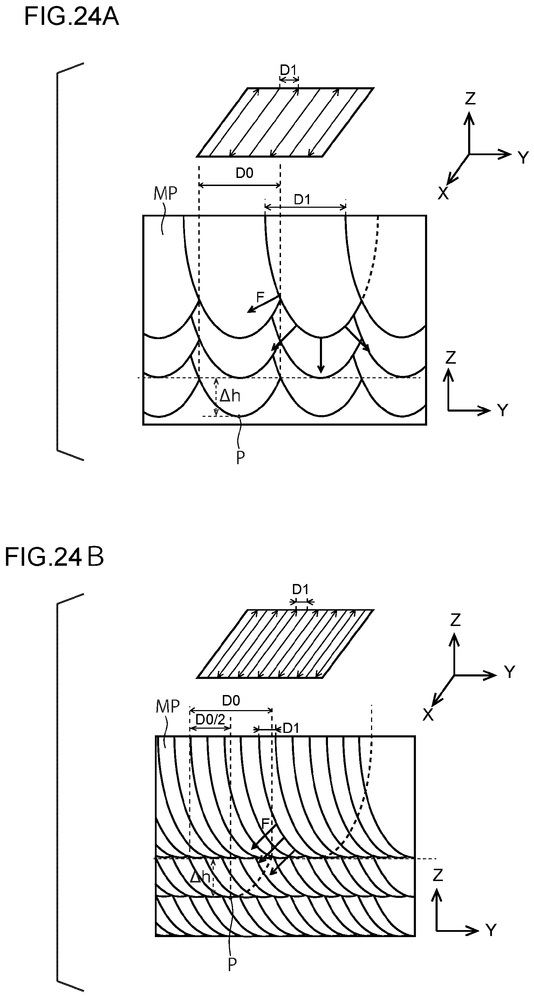

In addition, when forming the solidified portion SA of the present embodiment, a hatch spacing D1 which is the distance between adjacent beam scanning lines in the beam scanning path is made significantly narrower than a width D0 of the molten pool that is defined hereunder. FIG. 24A and FIG. 24B are schematic diagrams for describing the relation between the hatch spacing D1 and the width D0 of a molten pool (bead) for forming the solidified portion SA of the structure in the present embodiment.

Referring to FIG. 24A, in a cross section perpendicular to the scanning direction of the beam 30, a molten pool MP has a downwardly convex curved shape. Here, the apex (deepest position) of the downwardly convex shape of the molten pool MP is defined as "apex P". Further, the height (a lamination pitch described later) of the inorganic powder layer 206 formed in the formation step of the layer-by-layer manufacturing process is defined as "Δh". In this case, the width of the molten pool MP at a position that is elevated by an amount corresponding to Δh in the build direction Z from the apex P is defined as D0 (mm).

At this time, in the present embodiment, the hatch spacing D1 and the width D0 of the molten pool MP are set so as to satisfy Formula (1).

$$0 < D1/D0 \le 0.20 \qquad (1)$$

In FIG. 24A, the hatch spacing D1 is excessively large relative to the width D0 of the molten pool MP. On the other hand, in FIG. 24B, the hatch spacing D1 and the width D0 of the molten pool MP satisfy Formula (1).

As illustrated in FIG. 24B, the hatch spacing D1 is adjusted so as to be made sufficiently narrow relative to the width D0 to thereby satisfy Formula (1). In this case, the heat flow direction in the molten pool MP during the manufacturing process can be restricted to a fixed direction, and thus the structure of the present embodiment can be manufactured.

A preferable upper limit of D1/D0 is 0.18, more preferably is 0.15, and further preferably is 0.12.

Specifically, in a case where the hatch spacing D1 and the width D0 of the molten pool MP do not satisfy Formula (1), as in FIG. 24A, a heat quantity F of the molten pool MP flows radially to the outside of the molten pool MP along the interface of the molten pool MP. On the other hand, in a case where the hatch spacing D1 and the width D0 of the molten pool MP satisfy Formula (1), as in FIG. 24B, the direction of the heat quantity F released from the molten pool MP is uniformly aligned to a certain extent. By this kind of directional control of the heat quantity F, a single-crystal or single-crystal-like β phase is initially formed in the solidified portion SA. Then, a part of the single-crystal or single-crystal-like β phase transforms to $\alpha_2$ phase. By this means, a structure including the directional control area OA in which the $\alpha_2$ phase and the β phase are elongated in the same direction is manufactured.

Note that, although in FIG. 24B the heat quantity F flows in a direction that intersects with the Z direction and the Y direction, a case may also arise in which the direction in which the heat quantity F flows is approximately parallel to the Z direction. In short, in the case illustrated in FIG. 24B of the present embodiment, the heat quantity F is fixed to a certain extent in any direction.

Before manufacturing the structure to be manufactured, the width D0 of the molten pool MP can be checked by manufacturing a sample and observing a cross section that includes the Z direction of the sample. If the cross section of the sample is as illustrated in FIG. 24A, the width D0 of the molten pool MP can be determined based on the shape of the molten pool MP. On the other hand, in a case where the width D0 cannot be determined based on the shape of the molten pool MP, such as when the cross section of the sample is as illustrated in FIG. 24B, a width D0/2 is determined based on the position of the apex P of the molten pool MP and the identifiable shape portion of the molten pool MP. The determined D0/2 is doubled, and the obtained value is defined as the width D0 of the molten pool MP. As described above, the width D0 of the molten pool MP can be measured by manufacturing a sample before manufacturing the structure to be manufactured. This allows the scanning method for scanning the beam 30 to be adjusted.

Information relating to the scanning method for scanning the beam 30 is, for example, stored in advance in the storage or memory in the control unit 10. A scanning method for scanning the beam in each solidified layer SLk is determined by the above process.

[Regarding formation step S2]

In the formation step S2, beam scanning is performed based on the scanning method for scanning the beam 30 determined in the design step S1 to thereby form each solidified layer SLk and manufacture the structure. Note that, the formation step S2 is performed after evacuating the interior of the chamber 20.

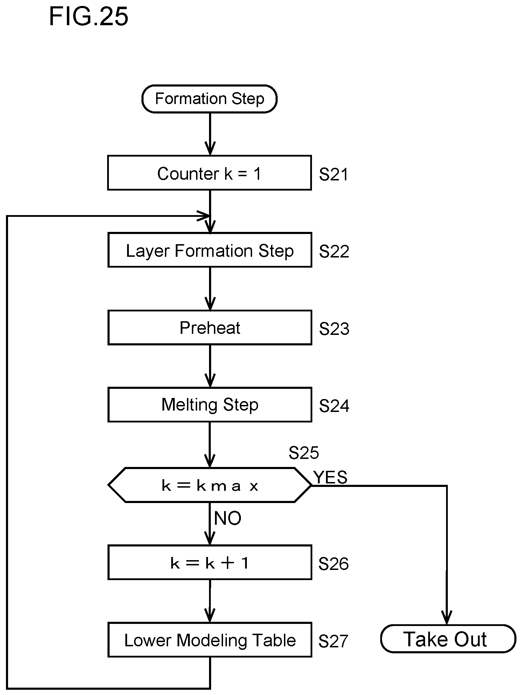

FIG. 25 is a flowchart of the formation step S2. Referring to FIG. 25, first, the control unit 10 sets a counter k to "1" (S21), and starts formation of a first solidified layer SL1 that is the bottom layer.

An inert gas (argon, nitrogen, helium, or the like) is supplied into the chamber 20 to preheat the base 208 arranged on the modeling table 203. Note that, during preheating, after creating a vacuum, the base 208 may be preheated without supplying inert gas. Alternatively, the base 208 may be preheated after supplying inert gas without creating a vacuum. The preheating of the base 208 does not have to be performed.

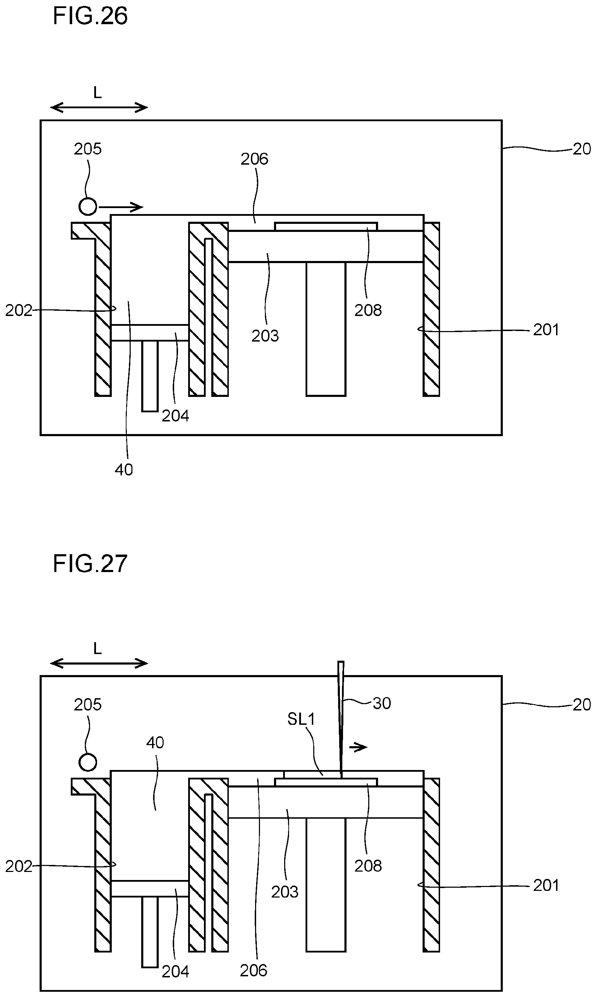

Next, the control unit 10 instructs to form the inorganic powder layer 206 (S22). The control unit 10 issues a command to raise the piston 204 of the powder supply chamber 202 to discharge the inorganic powder particles 40 that will serve as the starting material of the structure. In response to the command from the control unit 10, the powder supply chamber 202 discharges the inorganic powder particles 40. At this time, as illustrated in FIG. 26, the recoater 205 moves in the L direction. By this means, the discharged inorganic powder particles 40 are moved in the L direction and supplied to the bed forming chamber 201. The inorganic powder particles 40 accumulate on the base 208 and the modeling table 203, and the inorganic powder layer 206 is formed.

The recoater 205 also moves horizontally (in the L direction) on the surface of the inorganic powder layer 206 on the base 208. At such time, the inorganic powder particles 40 move in the horizontal direction. The thickness of the inorganic powder layer 206 that is the bottom layer is, for example, around 5 to 1000 $\mu$m.

Next, the control unit 10 instructs to preheat the inorganic powder layer 206 (S23). The preheating is an optional step. In the case of performing preheating, the preheating can be performed by a variety of methods. For example, the inorganic powder layer 206 may be preheated by irradiating the beam 30 thereon, or the inorganic powder layer 206 may be preheated by increasing the temperature of the modeling table 203. The inorganic powder layer 206 may also be preheated by heating the inorganic powder particles 40 inside the bed forming chamber 201 with a heater.

Next, based on the beam scanning method determined in the design step S1, the inorganic powder layer 206 is scanned with the beam 30 to melt the inorganic powder layer 206 and form a solidified layer SL1 that is the first layer (S24). The control unit 10 reads out data pertaining to the scanning method for scanning the beam 30 created in the design step S1 from the memory. The control unit 10 controls the beam 30 based on the data pertaining to the scanning method for scanning the beam 30 that is read out.

Specifically, the control unit 10 instructs to scan the solidified layer SL1 with the beam 30 using the determined scanning path for the beam 30. By this means, the solidified layer SL1 is formed.

**In** the melting step (S24), not only the inorganic powder layer 206, but also a surface layer portion of the base 208 may be melted. The beam 30 is scanned under the aforementioned beam conditions to melt the inorganic powder layer 206 and form the solidified layer SL1 as illustrated in FIG. 27. At such time, in the inorganic powder layer 206, inorganic powder particles 40 which are disposed in an area other than the solidified layer SL1 are not melted and are also not sintered.

After the solidified layer SL1 that is the first layer is formed, the control unit 10 determines whether or not the counter k is kmax (S25). Here, since the counter k = 1 (NO in S25), the control unit 10 sets the counter k to k+1 = 2 (S26). The control unit 10 then prepares to manufacture a solidified layer SL2 that will be the second layer.

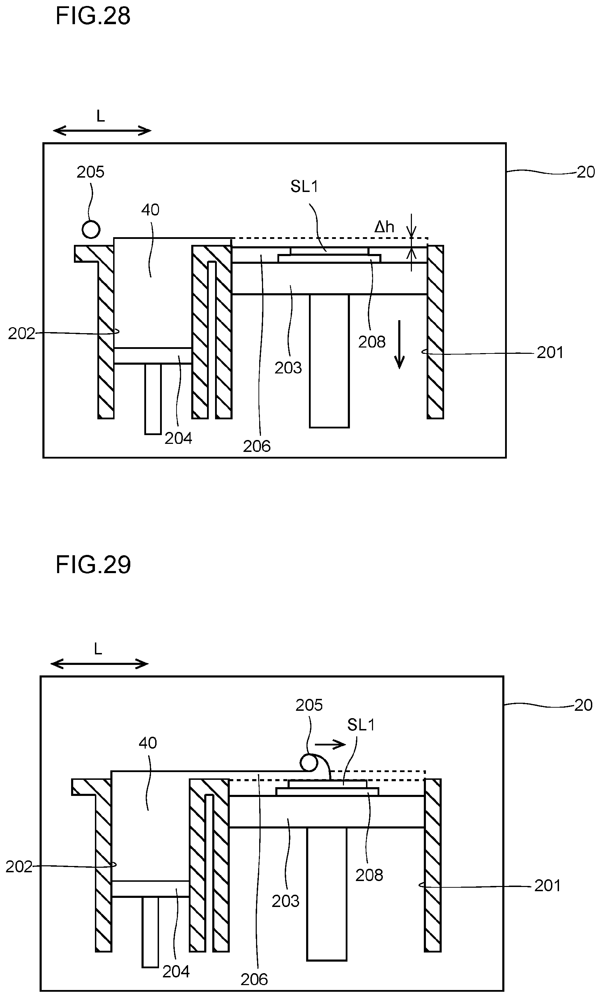

The control unit 10 instructs to lower the modeling table 203 by only the amount of a lamination pitch $\Delta$h (S27). As a result, as illustrated in FIG. 28, the surface of the inorganic powder layer 206 is lowered by an amount corresponding to $\Delta$h as compared to FIG. 27.

After step S27 is completed, the process returns to step S22. At such time, the control unit 10 instructs to form a new inorganic powder layer 206 on the inorganic powder layer 206 where the solidified layer SL1 has been formed (S22). Specifically, in response to a command from the control unit 10, the piston 204 inside the powder supply chamber 202 rises and the inorganic powder particles 40 are discharged again. At such time, as illustrated in FIG. 29, the recoater 205 moves in the L direction. Therefore, the inorganic powder particles 40 move in the L direction to thereby form a new inorganic powder layer 206 having a thickness of $\Delta$h. The surface of the new inorganic powder layer 206 is made flat by the recoater 205.

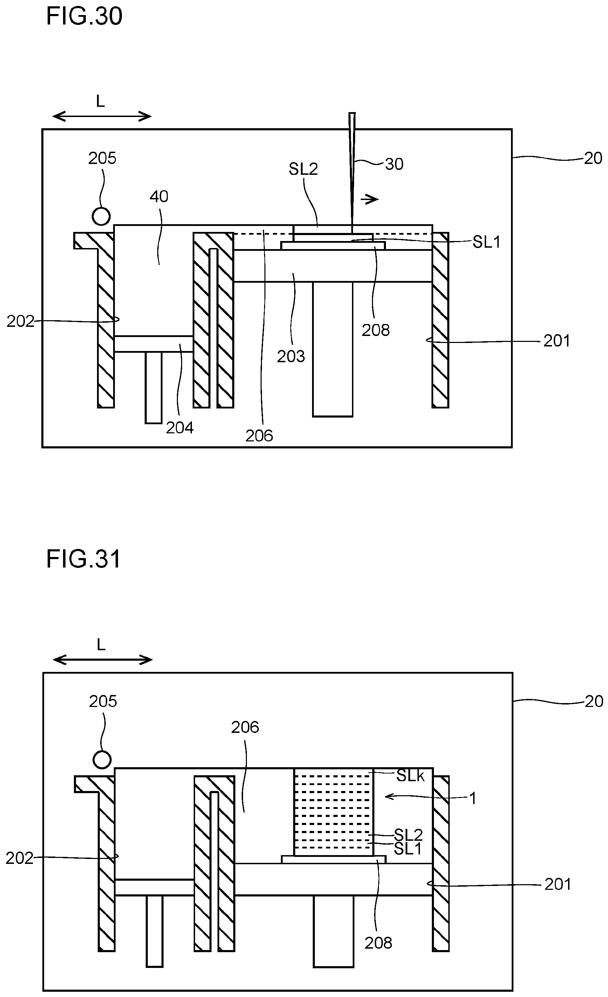

Next, the control unit 10 instructs to preheat the inorganic powder layer 206 (S23) and form the solidified layer SL2 that is the second layer (S24). At such time, the control unit 10 instructs to irradiate the beam 30 onto the inorganic powder layer 206 based on the manufacturing conditions data for the k-th layer (here, k = 2). As a result, as illustrated in FIG. 30, the inorganic powder layer 206 that is within the area irradiated with the beam 30 is melted and solidified, and the solidified layer SL2 is formed. By performing the above process, the solidified layer SL2 is laminated on the solidified layer SL1.

Next, the process proceeds to step S25, and until the value of k becomes kmax, in other words, until a solidified layer SLkmax that is the uppermost layer is formed, the control unit 10 repeats the operation from step S22 to step S27. That is, the control unit 10 repeats the layer formation step (S22) and the melting step (S24) until the structure having the desired three-dimensional shape is completed as illustrated in FIG. 31.

In the present embodiment, in addition, in the formation step (S2), the scanning direction of the beam when forming a solidified layer SLj of a j-th layer (j is a natural number) is adjusted so as to be parallel to (X scanning) or to intersect at 90° (XY scanning) with the scanning direction of the beam 30 when forming a solidified layer SLj-1 of a j-1th layer. Further, when performing beam scanning within the same layer, the beam scanning is performed so that the scanning directions of adjacent scanning lines are opposite directions to each other or are the same direction as each other. In addition, when performing beam scanning for each layer, the beam is scanned so that the width D0 of the molten pool MP at a position that is elevated by Δh from the apex P of the molten pool MP that has a downwardly convex shape in a cross section perpendicular to the beam scanning direction, and the hatch spacing D1 that is the distance between adjacent scanning lines when performing beam scanning within the same layer satisfy Formula (1). By means of the above adjustments, the structure of the present embodiment can be made.

By carrying out the above adjustments, when the inorganic powder layer 206 solidifies after melting, primary $\beta$ phase initially forms. The formed primary $\beta$ phase is a single crystal or is single crystal-like. Thereafter, as it cools, a part of the primary $\beta$ phase PH2 transforms to $\alpha_2$ phase PH1. At such time, following Burgers orientation relationship, the $\alpha_2$ phase PH1 forms in a manner so that {110} of the $\beta$ phase PH2 and the (0001) plane of the $\alpha_2$ phase PH1 become parallel and the <111> orientation of the $\beta$ phase PH2 and the <11-20> orientation of the $\alpha_2$ phase PH1 become parallel.

When a part of the primary $\beta$ phase PH2 transforms to $\alpha_2$ phase PH1, there are 12 types of variant relationships between the $\alpha_2$ phase PH1 and the $\beta$ phase PH2 in which {110} of the $\beta$ phase PH2 and the (0001) plane of the $\alpha_2$ phase PH1 become parallel and the <111> orientation of the $\beta$ phase PH2 and the <11-20> orientation of the $\alpha_2$ phase PH1 become parallel.

In the present embodiment, as illustrated in FIG. 24B, the beam 30 is scanned in a manner so that the width D0 of the molten pool MP and the hatch spacing D1 satisfy Formula (1). By this means, as illustrated in FIG. 24B, the direction in which the heat quantity F flows is made constant. As a result, among the 12 types of orientation relationships, only a specific one or plurality of orientation relationships is selected. As a result, the $\beta$ phase PH2 and the $\alpha_2$ phase PH1 are elongated in a predetermined direction, and a directional control area OA is formed.

FIG. 2, FIG. 10, and FIG. 32 are cross-sectional photographs including the Z direction and Y direction of structures obtained by performing layer-by-layer manufacturing in which the scanning method for scanning the beam and D1/D0 were different to each other. In each of FIG. 2, FIG. 10, and FIG. 32, a structure composed of a TiAl alloy (Ti-44Al-6Nb-1.2Cr) was manufactured. Each of these structures consisted of one solidified portion.

With regard to the structure in FIG. 2, the scanning direction of the beam when forming a solidified layer SLj that was the j-th layer (j is a natural number) was adjusted so as to be parallel (X scanning) to the scanning direction of the beam when forming a solidified layer SLj-1 that was the j-1th layer. In addition, the ratio (= D1/D0) of the hatch spacing D1 to the width D0 of the molten pool MP was 0.10, which satisfied Formula (1). As a result, as shown in FIG. 2, the manufactured structure had a directional control area OA in which $\alpha_2$ phases PH1 and $\beta$ phases PH2 were elongated in the build direction Z. Further, a cross section including the Z direction of the entire structure (5 mm $\times$ 5 mm $\times$ 15 mm) was substantially the directional control area OA.

With regard to the structure in FIG. 10, the scanning direction of the beam when forming a solidified layer SLj that was the j-th layer (j is a natural number) was adjusted so as to intersect at 90° (XY scanning) with the scanning direction of the beam when forming a solidified layer SLj-1 that was the j-1th layer. In addition, the ratio (= D1/D0) of the hatch spacing D1 to the width D0 of the molten pool MP was 0.10, which satisfied Formula (1). As a result, as shown in FIG. 10, the manufactured structure had a directional control area OA in which $\alpha_2$ phases PH1 and $\beta$ phases PH2 were elongated in a direction inclined at 45° to the build direction Z. Further, a cross section including the Z direction of the entire structure (5 mm $\times$ 5 mm $\times$ 15 mm) was substantially the directional control area OA.

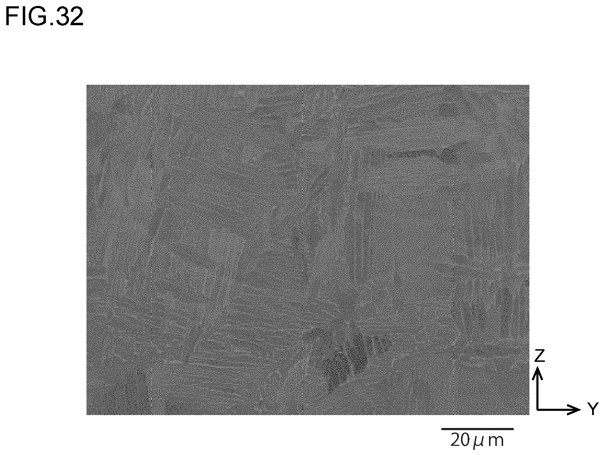

On the other hand, with regard to the structure in FIG. 32, although the scanning direction of the beam when forming a solidified layer SLj that was the j-th layer (j is a natural number) was adjusted so as to be parallel (X scanning) to the scanning direction of the beam when forming a solidified layer SLj-1 that was the j-1th layer, the ratio (= D1/D0) of the hatch spacing D1 to the width D0 of the molten pool MP was 0.37, which did not satisfy Formula (1). As a result, in the manufactured structure, as shown in FIG. 32, a directional control area OA in which $\alpha_2$ phases PH1 and $\beta$ phases PH2 were elongated in a predetermined direction was not formed, and the structure (5 mm $\times$ 5 mm $\times$ 15 mm) was a polycrystal.

The above test results demonstrate that the structure of the present embodiment can be made by adjusting the scanning direction of the beam when forming a solidified layer SLj of a j-th layer (j is a natural number) so as to be parallel to (X scanning) or to intersect at 90° (XY scanning) with the scanning direction of the beam when forming a solidified layer SLj-1 of a j-1th layer, and also scanning the beam so that the width D0 of the molten pool MP and the hatch spacing D1 satisfy Formula (1).

Note that, the shape of the solidified layer SLk is not restricted by the shape of the underlying solidified layer SLk-1, and the solidified layer SLk can be made a larger shape or a smaller shape than the solidified layer SLk-1. In addition, one or a plurality of spaces can be formed in the shape of the solidified layer SLk. In such case, the structure can have a shape that cannot be obtained by normal cutting, such as having a closed space or having a complex hole shape. The structure of the present embodiment can be manufactured by the above manufacturing method.

[Manufacturing method for forming $\gamma$ phase in $\alpha_2$ phase]

In the case of forming the $\gamma$ phase PH3 within the $\alpha_2$ phase PH1, as in the structure of the second embodiment, a structure manufactured by the layer-by-layer manufacturing process described above is subjected to the following heat treatment. The heat treatment temperature is set, for example, within the range of 600 to 1300°C. Although the holding time at the heat treatment temperature is not particularly limited, for example, the holding time is set within the range of 1 second to 1000 minutes. By performing the above-described heat treatment, following the Blackburn orientation relationship, the $\gamma$ phase PH3 that is elongated transversely to the elongation direction of the $\alpha_2$ phase PH1 is formed within the $\alpha_2$ phase PH1 so that the (0001) plane of the $\alpha_2$ phase and the {111} plane of the $\gamma$ phase become parallel, and the <11-21> orientation of the $\alpha_2$ phase and the <1-10> orientation of the $\gamma$ phase become parallel. The structure of the second embodiment can be manufactured by the above manufacturing process.

Note that, the structure shown in FIG. 6 is a structure obtained by holding the structure shown in FIG. 2 at 850°C for 60 minutes, and thereafter air-cooling the structure to room temperature. Further, the structure shown in FIG. 12 is a structure obtained by holding the structure shown in FIG. 10 at 850°C for 60 minutes, and thereafter air-cooling the structure to room temperature.

In addition, the $\gamma$ phase PH3 can also be formed within the $\alpha_2$-phase PH1, as in the structure of the second embodiment, by the following method different from the method that subjects a structure manufactured by a layer-by-layer manufacturing process to a heat treatment. Specifically, after performing the melting step (S24) to form the solidified layer SLk, the formed solidified layer SLk is subjected to a heat treatment by additional beam irradiation to form the $\gamma$ phase PH3 within the $\alpha_2$ phase PH1 of the solidified layer SLk. When this method is adopted, the heat treatment can be performed during layer-by-layer manufacturing. Therefore, the structure manufactured by the layer-by-layer manufacturing process will include the $\gamma$ phase PH3 within the $\alpha_2$ phase PH1 even if a heat treatment is not performed thereafter.

Embodiments of the present disclosure have been described above. However, the embodiments described above are merely examples for carrying out the present disclosure. Therefore, the present disclosure is not limited to the above-described embodiments, and can be implemented by appropriately modifying the above embodiments within a range not departing from the gist thereof.

REFERENCE SIGNS LIST

PH1    $\alpha_2$ Phase
PH2    $\beta$ Phase
PH3    $\gamma$ Phase
SA     Solidified Portion

**Claims**

1.  A structure containing a TiAl alloy, comprising:

    a solidified portion composed of a TiAl alloy,
    wherein a metallographic structure of the solidified portion has:
    a cross section including a directional control area in which an $\alpha_2$ phase and a $\beta$ phase are alternately arranged, with the $\alpha_2$ phase being elongated in a predetermined direction, and the $\beta$ phase being elongated in an elongation direction of the $\alpha_2$ phase.

2.  The structure according to claim 1, wherein:
    the cross section of the metallographic structure of the solidified portion further comprises a $\gamma$ phase that is contained within the $\alpha_2$ phase and is elongated transversely to an elongation direction of the $\alpha_2$ phase.

3.  The structure according to claim 1 or claim 2, wherein:
    a length of the $\alpha_2$ phase and the $\beta$ phase in the elongation direction in the cross section is 500 $\mu$m or more.

4.  The structure according to claim 1 or claim 2, wherein:

    the structure comprises the solidified portion composed of a TiAl alloy, and
    the cross section of the solidified portion comprises the directional control area.

5.  The structure according to claim 1, further comprising:
    a sintered portion that is a sintered compact of an inorganic material.

6.  The structure according to claim 1, wherein:

a space is formed between the solidified portions that are adjacent.

7. A method for manufacturing a structure, comprising:

a design step of determining a scanning method for scanning a beam for forming the structure to be manufactured, and
a formation step of scanning the beam based on a scanning method for scanning the beam determined in the design step and melting inorganic powder particles that serve as a raw material of the structure to form the structure,
wherein:
in the design step:

the structure to be manufactured is divided into a plurality of solidified layers in a build direction, and a scanning method for scanning a beam at each solidified layer is determined;
in the formation step:

a layer formation step of supplying the inorganic powder particles onto a base and forming an inorganic powder layer, and
a melting step of scanning the beam based on a scanning method for scanning a beam determined in the design step to melt the inorganic powder layer and form the solidified layer,
are repeatedly performed alternately to laminate a plurality of the solidified layers to form the structure according to claim 1; and
in the formation step, in addition:

a scanning direction of the beam when forming the solidified layer of a j-th layer (j is a natural number) is adjusted so as to be parallel to or to intersect at 90° with a scanning direction of the beam when forming the solidified layer of a j-1th layer, and
when scanning the beam at each layer, the beam is scanned so that a width D0 from an apex of a molten pool having a downwardly convex shape to a position that is elevated by an amount of a height of the inorganic powder layer from the apex in a cross section perpendicular to the beam scanning direction, and a hatch spacing D1 that is a distance between adjacent scanning lines when scanning the beam within a same layer satisfy Formula (1).

$$0 < D1/D0 \leq 0.20 \qquad (1)$$

8. The method for manufacturing a structure according to claim 7, further comprising:
a heat treatment step of subjecting the structure that is manufactured to a heat treatment in which a heat treatment temperature is set within a range of 600 to 1300°C to manufacture the structure according to claim 2.

FIG.1

FIG.2

OA

10μm

FIG.3

OA

FIG.4

FIG.5

FIG.6

FIG.7

FIG.8

FIG.9

(A)                                                    (B)

## FIG.10

OA

PH1

PH2

20.0kV x2,000 10µm

10µm

Z
Y

## FIG.11

OA

PH1

PH2

Z
Y

## FIG.12

OA

PH1

PH2

10 μm

Z
Y

## FIG.13

OA

PH3

PH1

PH2

Z
Y

FIG.14

FIG.15

FIG.16

FIG.17

FIG.18

FIG.19

```
        ( Design Step )
              │
              ▼
  ┌──────────────────────────────┐
  │  Solidified Layer Dividing Step │  S11
  └──────────────────────────────┘
              │
              ▼
  ┌──────────────────────────────┐
  │ Solidified Area Partitioning Step │  S12
  └──────────────────────────────┘
              │
              ▼
  ┌──────────────────────────────┐
  │   Layered Structure Extending   │  S13
  │  Direction Determination Step   │
  └──────────────────────────────┘
              │
              ▼
  ┌──────────────────────────────┐
  │        Scanning Method          │  S14
  │      Determination Step         │
  └──────────────────────────────┘
              │
              ▼
        ( To Step S2 )
```

FIG.20

1

SLk

SL1

Z

Y

X

FIG.21

SLk

DA

Z

Y

X

## FIG.22

SLj

SLj-1

X-Scan

<011>

Z

Y

X

## FIG.23

SLj

SLj-1

XY-Scan

<001>

Z

Y

X

## FIG.24A

## FIG.24 B

FIG.25

```
          ( Formation Step )
                  │
                  ▼
     ┌────────────────────────┐
     │     Counter k = 1      │  S21
     └────────────────────────┘
                  │
      ┌──────────▶│
      │           ▼
      │  ┌────────────────────────┐
      │  │  Layer Formation Step  │  S22
      │  └────────────────────────┘
      │           │
      │           ▼
      │  ┌────────────────────────┐
      │  │        Preheat         │  S23
      │  └────────────────────────┘
      │           │
      │           ▼
      │  ┌────────────────────────┐
      │  │      Melting Step      │  S24
      │  └────────────────────────┘
      │           │                  S25
      │           ▼
      │      ◁────────────▷  YES
      │       k = k m a x ─────────────┐
      │      ◁────────────▷            │
      │           │ NO                 │
      │           ▼                    │
      │  ┌────────────────────────┐    │
      │  │       k = k + 1        │  S26
      │  └────────────────────────┘    │
      │           │                    │
      │           ▼                    ▼
      │  ┌────────────────────────┐  ( Take Out )
      └──│  Lower Modeling Table  │  S27
         └────────────────────────┘
```

FIG.26

FIG.27

FIG.28

FIG.29

FIG.30

FIG.31

FIG.32

Z

Y

$\overline{20\mu m}$

## INTERNATIONAL SEARCH REPORT

| International application No. |
| --- |
| **PCT/JP2023/038307** |

**A. CLASSIFICATION OF SUBJECT MATTER**

*C22C 1/04*(2023.01)i; *B22F 1/00*(2022.01)i; *B22F 5/04*(2006.01)i; *B22F 10/28*(2021.01)i; *B22F 10/366*(2021.01)i; *B22F 10/64*(2021.01)i; *C22C 14/00*(2006.01)i

FI: C22C1/04 C; B22F1/00 N; B22F5/04; B22F10/28; B22F10/366; B22F10/64; C22C14/00 Z

According to International Patent Classification (IPC) or to both national classification and IPC

**B. FIELDS SEARCHED**

Minimum documentation searched (classification system followed by classification symbols)

C22C1/04; B22F1/00; B22F5/04; B22F10/28; B22F10/366; B22F10/64; C22C14/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JST7580 (JDreamIII)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2021-121690 A (MITSUBISHI HEAVY IND AERO ENGINES LTD.) 26 August 2021 (2021-08-26)<br>claims, paragraphs [0055]-[0058], fig. 4, 5 | 1-8 |
| A | JP 2018-115090 A (OSAKA UNIVERSITY) 26 July 2018 (2018-07-26)<br>entire text | 1-8 |
| A | JP 2017-171985 A (OSAKA UNIVERSITY) 28 September 2017 (2017-09-28)<br>paragraphs [0037], [0042], [0043], fig. 5A | 1-8 |
| A | US 2022/0250152 A1 (RENISHAW PLC) 11 August 2022 (2022-08-11)<br>paragraph [0035], fig. 3 | 1-8 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 December 2023** | **19 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/038307**

| Patent document cited in search report | | | Publication date (day/month/year) | Patent family member(s) | | | Publication date (day/month/year) |
|---|---|---|---|---|---|---|---|
| JP | 2021-121690 | A | 26 August 2021 | (Family: none) | | | |
| JP | 2018-115090 | A | 26 July 2018 | (Family: none) | | | |
| JP | 2017-171985 | A | 28 September 2017 | (Family: none) | | | |
| US | 2022/0250152 | A1 | 11 August 2022 | WO | 2020/249932 | A1 | |
| | | | | specification, p. 9, lines 15-27, fig. 3 | | | |
| | | | | EP | 3750651 | A1 | |
| | | | | EP | 3980209 | A1 | |
| | | | | CN | 114502303 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020079577 A